# EUROPEAN PATENT APPLICATION

(11) **EP 2 498 358 A2**
(43) Date of publication of application: **12.09.2012**
(21) Application number: 12158557.4
(22) Date of filing: 08.03.2012
(51) Int. Cl.: H02G 3/14

(54) **System for characterizing plates of electrical elements or the like**

(30) Priority: 08.03.2011 ES 201100266
(71) Applicant: Schneider Electric España, S.A., 08019 Barcelona (ES)
(72) Inventor: Andrés Rodriguez, Iñigo, 08019 BARCELONA (ES); Barrio Goñi, Juan Pedro, 08019 BARCELONA (ES); Morte Sola, David, 08019 BARCELONA (ES)
(74) Representative: Desormiere, Pierre-Louis

(57) **Abstract**

The present invention relates to a system for characterizing plates of electrical elements or the like, consisting of providing the body (1) of the application plates with a flange (2) on the edge of the inner windows (3) and with another flange (4) at the outer perimeter contour, such that said flanges (2 and 4) define a tucked-in surface on the upper face of said body (1) of the plate, in which an accessory characterizing sheet (5) is fixed.

## Description

### Sector of the Art

The present invention relates to the elements used in electrical fixtures and other similar fixtures such as switches, plug bases, sockets, etc., and more particularly to the decorative plates of said elements, proposing a system which allows advantageously providing the decorative characterization of those plates.

### State of the Art

Elements such as switches, plug bases, sockets, etc., provided in the electrical fixtures and other similar fixtures which generally include a decorative plate which is incorporated in the outer part surrounding the functional part of the element, these plates can be simple plates for a single functional element or multiple plates commonly applied for two or more functional elements.

Said decorative plates are often provided with a color characterization to establish particular and diverse decorative aspects, said characterization being conventionally performed by means of applying paints or incorporating coloring dyes in the material making up the decorative plates, which is generally injected plastic.

These conventional solutions generally solve the problem of characterizing the decorative plates but are not very efficient in effectively defining some particular characterizations, such as imitation wood, imitation metal, etc.

### object of the Invention

According to the invention a system is proposed for characterizing the decorative plates of electrical elements or the like whereby characterization of any type can be achieved in an effective and simple manner.

This system object of the invention consists of providing the decorative plates with a flange towards the front face at the perimeter contour and on the edge of the inner windows, defining a tucked-in surface in which an accessory characterizing sheet is fixed.

Each of the flanges of the outer perimeter contour of the decorative plates and the flange of the edge of the inner windows independently have a height which is equal to, greater or less than the thickness of the characterizing sheet, such that said flanges determine ridges between which the mentioned characterizing sheet is fitted, the edges thereof are protected by those ridges.

This system therefore allows characterizing the decorative plates in a simple and practical manner since adapting the coloring of the material making up the plate is not necessary; and, furthermore, characterizations of any type can be obtained with a perfect definition, since the characterizing sheet is manufactured in a completely independent process, such that materials and methods that accurately provide the desired appearance can be used.

On the basis of the above, the proposed system has very advantageous features for characterizing the decorative plates of the electrical elements and the like, acquiring its own identity and a preferred character with respect to the conventional systems having the same function.

### Description of the Drawings

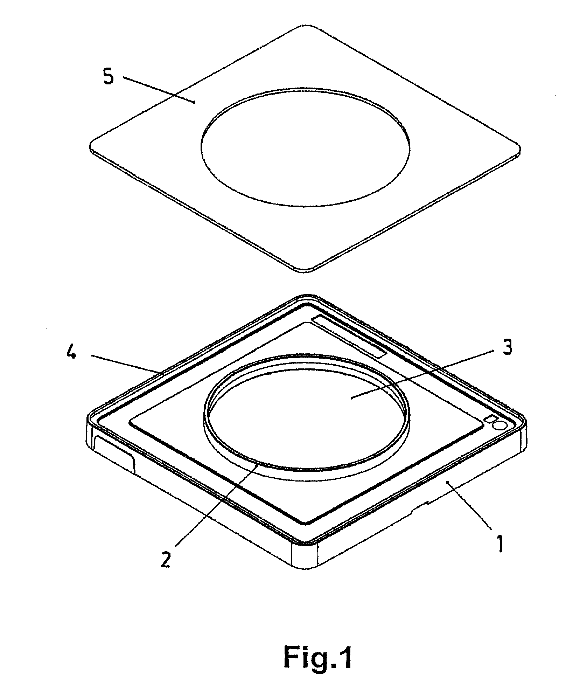

Figure 1 shows an exploded perspective view of a decorative plate of electrical elements or the like and a characterizing sheet intended to be fixed on said plate according to the system of the invention.

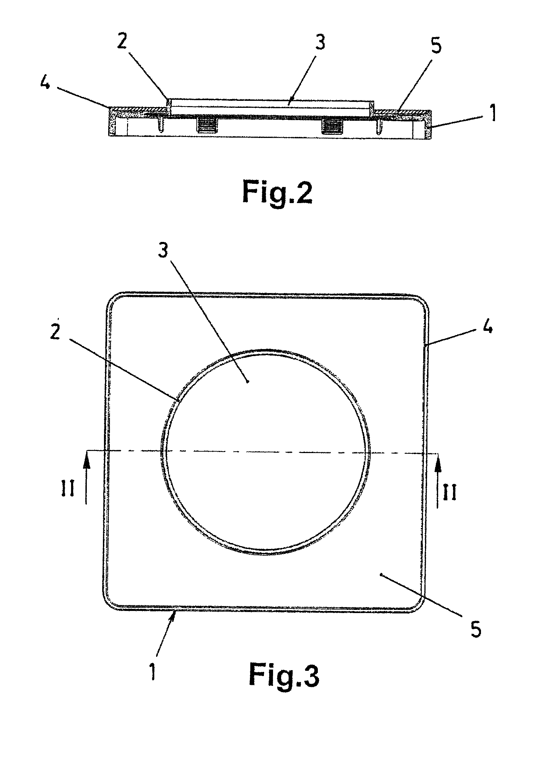

Figure 2 is an elevational view of the decorative plate with the characterizing sheet fixed thereon, according to the cross-section II-II indicated in Figure 3.
Figure 3 is a corresponding top plan view of the decorative plate provided with the characterizing sheet.

### Detailed Description of the Invention

The object of the invention relates to a system for characterizing decorative plates of elements for electrical fixtures or the like with features which allow realistically characterizing any imitation.

According to the proposed system, the body (1) of the application plates is provided, in its production, with a flange (2) on the edge of the inner windows (3) intended for fitting around the mechanism of electrical elements or the like and with another flange (4) at the perimeter contour of said body (1) of the plate.

Said flanges (2 and 4) protrude from the upper face of the body (1) of the plate, determining a tucked-in surface there between in which an accessory characterizing sheet (5) is fixed by gluing, clipping, ultrasounds or by other alternative fixing methods.

Each of the mentioned flanges (2 and 4) can independently have a height equal to the thickness of the accessory characterizing sheet (5), being level with same; have a height greater than the thickness of said accessory sheet (5), protruding upwards with respect to same; or a height less than the thickness of the mentioned accessory sheet (5), the corresponding borders of said accessory sheet (5) being partially concealed; those flanges (2 and 5) determining ridges between which there is fixed the accessory characterizing sheet (5) in any case.

It thus results in a plate characterized by the appearance of the accessory characterizing sheet (5), a sheet which by being an independent element can be manufactured with very authentic appearances, for example imitating wood, metal, etc., the edges of said accessory characterizing sheet (5) being protected by the flanges (2 and 4), whereby the plate assembly further has a perfect finish.

Although the embodiment depicted in the drawings shows a simple plate simple with a single inner window (3), the proposed system is also applicable in similar conditions for characterizing decorative plates provided with two or more inner windows (3) for placing them in common with respect to multiple electrical elements or the like without it altering the object of the invention.

## Claims

1. A system for characterizing plates of electrical elements or the like to provide the decorative plates with elements for electrical fixtures or the like with a particular characterization on the upper surface, **characterized in that** the body (1) of the application plates is provided with a flange (2) on the edge of the inner windows (3) intended for fitting the functional part of electrical elements or the like, and with another flange (4) at the outer perimeter contour, between which flanges (2 and 4) define a tucked-in surface on the upper face of said body (1) of the plate, in which an accessory characterizing sheet (5) is fixed.

2. The system for characterizing plates of electrical elements or the like according to claim 1, **characterized in that** the flange (2) of the edge of the inner windows (3) is provided with a height greater than the thickness of the accessory characterizing sheet (5) protruding upwards with respect to same.

3. The system for characterizing plates of electrical elements or the like according to claim 1, **characterized in that** the flange (2) of the edge of the inner windows (3) is provided with a height equal to the thickness of the accessory characterizing sheet (5), being level with the same.

4. The system for characterizing plates of electrical elements or the like according to claim 1, **characterized in that** the flange (2) of the edge of the inner windows (3) is provided with a height less than the thickness of the accessory characterizing sheet (5), the border of said accessory sheet (5) being partially concealed.

5. The system for characterizing plates of electrical elements or the like according to claim 1, **characterized in that** the flange (4) of the outer perimeter contour of the body (1) is provided with a height equal to the thickness of the accessory characterizing sheet (5), being level with the same.

6. The system for characterizing plates of electrical elements or the like according to claim 1, **characterized in that** the flange (4) of the outer perimeter contour of the body (1) is provided with a height less than thickness of the accessory characterizing sheet (5), the border of said accessory sheet (5) being partially concealed.

7. The system for characterizing plates of electrical elements or the like according to claim 1, **characterized in that** the flange (4) of the outer perimeter contour of the body (1) is provided with a height greater than the thickness of the accessory characterizing sheet (5), protruding upwards with respect to same.
